# EUROPEAN PATENT APPLICATION

(11) **EP 2 063 385 A2**
(43) Date of publication of application: **27.05.2009**
(21) Application number: 08016127.6
(22) Date of filing: 12.09.2008
(51) Int. Cl.: G06Q 10/00

(54) **Article management device**

(30) Priority: 13.11.2007 JP 2007294675
(71) Applicant: Toshiba TEC Kabushiki Kaisha, Tokyo 141-8664 (JP)
(72) Inventor: Suzuki, Shigeaki, Shinagawa-ku Tokyo 141-8664 (JP)
(74) Representative: Kramer - Barske - Schmidtchen

(57) **Abstract**

A wireless tag reader (1) inputs position information which specifies each of a plurality of regions in which each article is arranged from a position information input section (12). Whenever the position information is input, the wireless tag reader (1) overwrites and stores the input position information in a reading position buffer (33). The wireless tag reader (1) stores identification information specific to the wireless tag in a position management table (32) in association with position information of each region in which each article to which a wireless tag is attached is arranged. Whenever reading the identification information specific to the wireless tag from the wireless tag, the wireless tag reader (1) determines whether position information stored in the position management table (32) in association with the read identification information is consistent with position information stored in the reading position buffer (33), and displays and notifies a determination result on an inventory screen (40).

## Description

The present invention relates to an article management device which manages the location of articles such as commodities by reading information on a wireless tag attached to each article.

Recently, an article management system for managing the location of articles, by attaching a wireless tag to each article to be managed and reading information on the wireless tag by means of a wireless tag reader, has been developed.

For example, the article management system disclosed in Jpn. Pat. Appln. KOKAI Publication No. 2005-350205 is well known. In this system, a book wireless tag is attached to each book. Further, a bookshelf wireless tag is fixed on the front of each bookshelf on which books are arranged. When an inventory is taken, the operator reads the bookshelf wireless tags and the book wireless tags by means of a portable wireless tag reader. The system manages the location of the books by storing the bookshelf wireless tags and the book wireless tags read by the wireless tag reader in association with each other.

A wireless tag reader can read information on a plurality of wireless tags approximately at the same time without contact. This greatly eliminates human labor involved in taking an inventory. Further, this has a merit of greatly decreasing the time required for the inventory taking.

There is a possibility, however, that a wireless tag reader can read information from wireless tags located in areas which radio waves emitted from an antenna reach. Therefore, if radio waves are emitted beyond a designated area such as a specific shelf, wireless tag information on articles arranged outside the designated area is also read at the same time. It is difficult to make the wireless tag reader read only the wireless tag information on articles arranged inside the designated area. Therefore, articles arranged outside the designated area are also managed as being inside the designated area.

The present invention has been made in consideration of the above-described circumstances. It is therefore an object of the present invention to provide an article management device capable of accurately managing the location of each article by means of a wireless tag.

According to an aspect of the invention, there is provided An article management device comprising: a tag reading section configured to read identification information specific to a wireless tag attached to each article from the wireless tag; a position information input section configured to input position information which specifies each of a plurality of regions in which each article is arranged; a position information storage section configured to overwrite and store position information whenever the position information is input from the position information input section; a tag basic position storage section configured to store identification information specific to the wireless tag in association with the position information of each region in which each article to which the wireless tag is attached is arranged; a position determination section configured to determine whether the position information stored in the tag basic position information section in association with the identification information read from the wireless tag by the tag reading section is consistent with position information stored in the position information storage section; and a notification section configured to notify a determination result of each wireless tag by the position determination section, the identification information of said each wireless tag being read by the tag reading section.

The invention can be more fully understood from the following detailed description when taken in conjunction with the accompanying drawings, in which:
FIG. 1 is a block diagram showing a substantial configuration of the wireless tag reader according to an embodiment of the present invention.
FIG. 2 shows an example of a data structure of a tag management table formed in a storage section of the wireless tag reader.
FIG. 3 shows an example of a data structure of a position management table formed in the storage section of the wireless tag reader.
FIG. 4 shows an example of a data structure of a position code set with respect to each shelf partition.
FIG. 5 is a flowchart showing a substantial procedure for an inventory mode process executed by a control section of the wireless tag reader.
FIG. 6 is a flowchart concretely showing contents of a tag ID reading process in FIG. 5.
FIG. 7 is a flowchart concretely showing contents of a position information update process in FIG. 5.
FIG. 8 is a flowchart concretely showing contents of a position information definition process in FIG. 5.
FIG. 9 is a layout chart of an inventory screen displayed on a display section of the wireless tag reader.
FIG. 10 is a layout chart of a tag ID selection reception screen displayed on the display section of the wireless tag reader.
FIG. 11 is a layout chart of an indefinite tag notification screen displayed on the display section of the wireless tag reader.
FIG. 12 shows an example of data displayed on the inventory screen before wireless tag data is read.
FIG. 13 shows an example of data displayed on the inventory screen after the wireless tag data is read.
FIG. 14 shows an example of data displayed on the tag ID selection reception screen.
FIG. 15 shows another example of data displayed on the inventory screen before the wireless tag data is read.

Hereinafter, the best mode for carrying out the present invention will be described with reference to the accompanying drawings.

This embodiment relates to a case where the article management device of the present invention is applied to an inventory activity of a retail outlet which sells clothing and the like.

Generally, in this kind of retail outlet, commodity shelves each divided into a plurality of partitions are arranged in a store or a storehouse. In each partition of the commodity shelves, commodities are arranged by being classified according to their kind. In this embodiment, a specific position code is assigned to each partition of the commodity shelves. The position code functions as positional information for specifying the partition. A wireless tag is attached to each commodity. The wireless tag stores an ID, which is identification information specific to the tag.

When an inventory is taken, a portable wireless tag reader is used. First, the inventory operator operates the wireless tag reader and specifies a partition of a commodity shelf by a position code. Next, the operator reads a wireless tag of a commodity arranged in the partition by means of the wireless tag reader. The operator repeats the above-described procedure, and thereby the location of each commodity can be managed with respect to each partition. Thus, the wireless tag reader functions as an aspect of the article management device of the present invention.

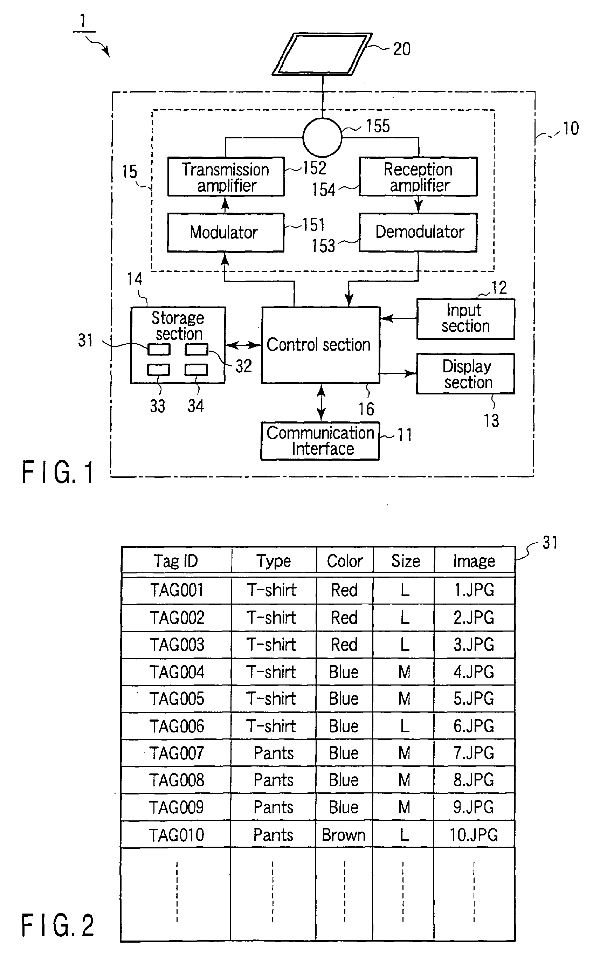

The block diagram of FIG. 1 illustrates a substantial configuration of the wireless tag reader 1 according to the embodiment of the present invention. The wireless tag reader 1 is formed of a portable body 10 and an antenna 20 attached to the body.

The antenna 20 is a flat patch antenna compatible with a radio wave communication system in which a microwave of 2.45 GHz is used, for example. The communication range of the antenna is approximately 1.0 to 1.5 meters at maximum. In place of the flat patch antenna, a dipole antenna may be used. Alternatively, a UHF band may be used as a radio frequency, and an antenna compatible with the frequency of the UHF band may be used.

The body 10 is formed of a communication interface 11, an input section 12, a display section 13, a storage section 14, a wireless circuit section 15 and a control section 16 which controls them. A higher-level device such as a computer is detachably connected to the communication interface 11. When such a higher-level device is connected, bidirectional data communication between the higher-level device and the control section 16 is managed by the communication interface 11. The input section 12 comprises various keys, a pointing device, and so forth. The display section 13 is a liquid crystal display, for example. The input section 12 and the display section 13 are configured such that the operator can make an input process and check displayed contents with the body 10 carried.

The wireless circuit section 15 comprises a modulator 151, a transmission amplifier 152, a reception amplifier 153, a demodulator 154, a circulator 155, and so forth. When transmission data is given from the control section 16, the modulator 151 modulates carrier signals based on the given transmission data. The modulated signals are output to the transmission amplifier 152. The transmission amplifier 152 amplifies the modulated signals. The amplified modulated signals are output to the circulator 155. The circulator 155 outputs the modulated signals given by the transmission amplifier 152 to the antenna 20, and output the modulated signals given by the antenna 20 to the reception amplifier 153. The reception amplifier 153 amplifies the modulated signals. The amplified modulated signals are output to the demodulator 154. The demodulator 154 demodulates reception data based on the modulated signals. The modulated reception data is output to the control section 16.

The storage section 14 is a rewritable nonvolatile memory such as a flash memory. The storage section 14 comprises at least a tag management table 31, a position management table 32, a reading position buffer 33, and an unspecified data buffer 34.

The tag management table 31 stores commodity attribute information and image information with respect to each ID of the wireless tags, as shown in FIG. 2. The commodity attribute information contains the type, color, size, and the like of a commodity (clothing) to which a wireless tag identified by a corresponding tag ID is attached. The image information is an image of a commodity to which a wireless tag identified by a corresponding tag ID is attached. Thus, the tag management table 31 forms an article attribute storage section.

The position management table 32 stores basic position information, current position information and a definite flag information with respect to each ID of the wireless tags. Each of the basic position information and the current position information corresponds to the position code which specifies the partition of the article shelves.

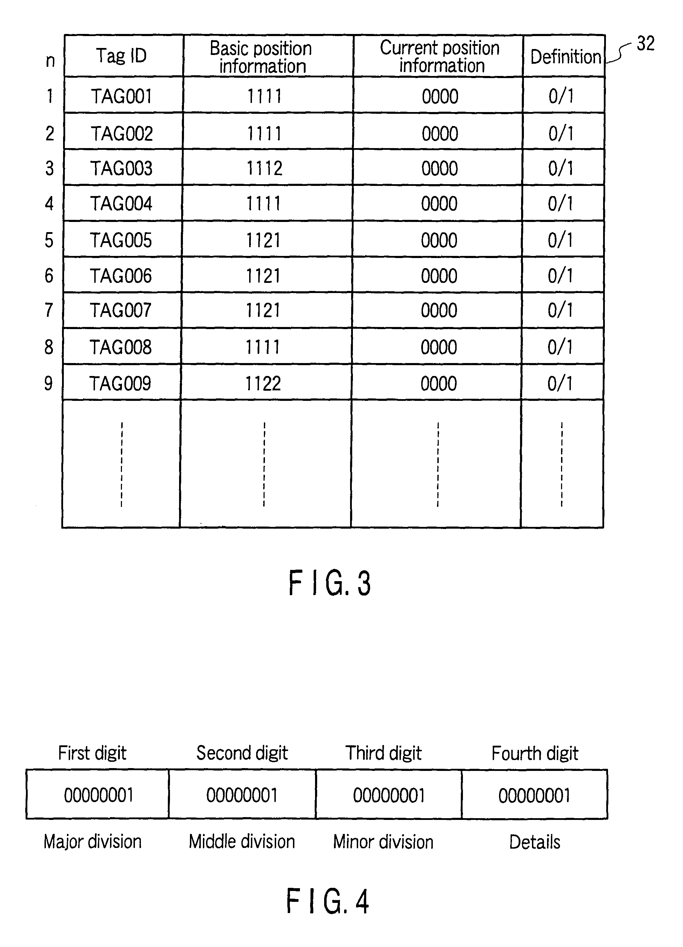

In this embodiment, the position code is denoted by four-digit data, in which a digit is formed of 8 bits (i.e., 1 byte), as shown in FIG. 4. In concrete, the first digit denotes a major division of the partition, the second digit denotes a middle division, the third digit denotes a minor division, and the last digit denotes details.

The major division classifies the partition according to whether the partition is in a shelf in the store or in a shelf in the storehouse. The middle division classifies the partition according to which area (such as the east side, the west side, the gateway side, and so forth) in the store or the storehouse the shelf including the partition is arranged in. The minor division classifies the partition according to which shelf in the store or the storehouse the partition is included. The details classify which place (such as the right side, the center, or the left side on the first shelf plate from the top) in the shelf the partition is provided in.

Therefore, the four-digit position code enables the operator to easily understand the location of commodities to which wireless 'tags with corresponding tag IDs are attached, that is, which place in a shelf placed in which area in a store or a storehouse each commodity is arranged in.

The definite flag is information for determining whether the location of the commodity to which a wireless tag with a corresponding tag ID is attached has become definite by an inventory activity using the wireless tag reader 1. In this embodiment, when the location of the commodity is indefinite, the definite flag is reset to "0", and when the location of the commodity has become definite, the definite flag is set to "1".

The tag ID area and the basic position information area of the position management table 32 store IDs of wireless tags whose tag data is read by the previous inventory process, and the position code which specifies the partition in which each commodity to which a wireless tag is attached is arranged, respectively. The current position information area stores a position code which specifies the partition where each commodity to which a wireless tag is attached is arranged. The position code is stored in correspondence to the ID of the wireless tag from which tag data is read in the inventory taken last time.

Thus, the tag ID area and the basic position information area of the position management table 32 form the tag basic position storage section. The tag ID area and the current position information area of the position management table 32 form the tag current position storage section.

The reading position buffer 33 stores position codes input via the input section 12 by sequentially overwriting the position codes in an inventory mode which will be described below. Thus, the input section 12 forms the position information input section. Further, the reading position buffer 33 forms the position information storage section.

The unspecified data buffer 34 sequentially stores and accumulates tag IDs and basic position information of wireless tags whose current position information is different from the basic position information, and article attribute information associated with the tag IDs.

The wireless tag reader 1 with the above-described configuration can download data in the tag management table 31 by being connected to a higher-level device via the communication interface 11. When data in the tag management table 31 is downloaded from the higher-level device, the control section 16 stores the data in the tag management table 31. The download may be activated from the side of the wireless tag reader 1 by input from the input section 12, or may be activated from the side of the higher-level device.

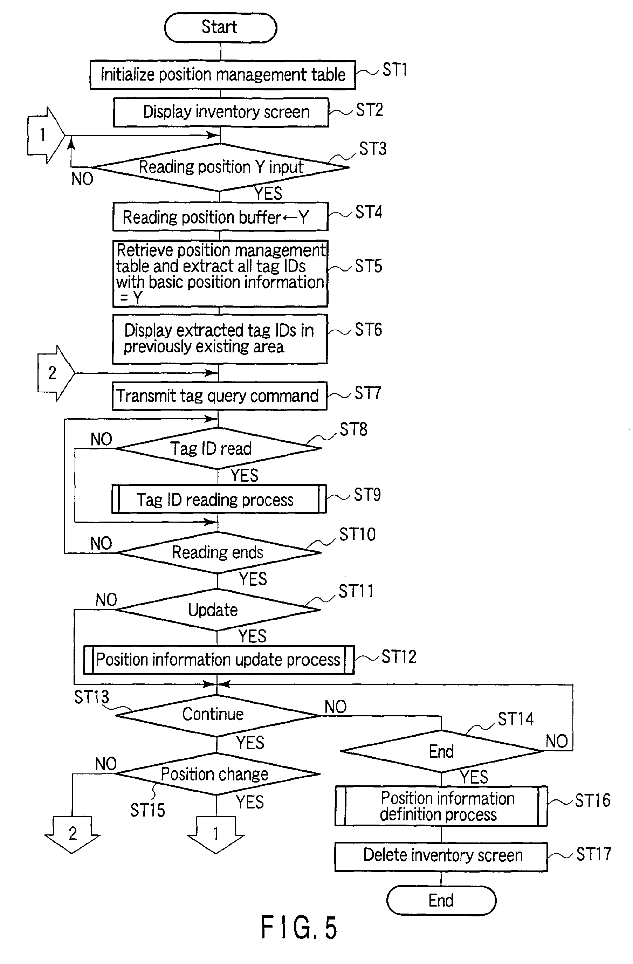

The operator who carries the wireless tag reader 1 operates the input section 12 of the wireless tag reader 1 and selects an inventory mode. Then, the control section 16 of the wireless tag reader 1 controls each section in the procedures shown in the flowcharts of FIGS. 5-8.

That is, when execution of the inventory mode is instructed by input from the input section 12, the control section 16 starts the following processing. First, the control section 16 initializes the position management table 32 in step ST1. By the initialization, the current position information area of the position management table 32 is cleared. Further, all the definite flags are reset to "0".

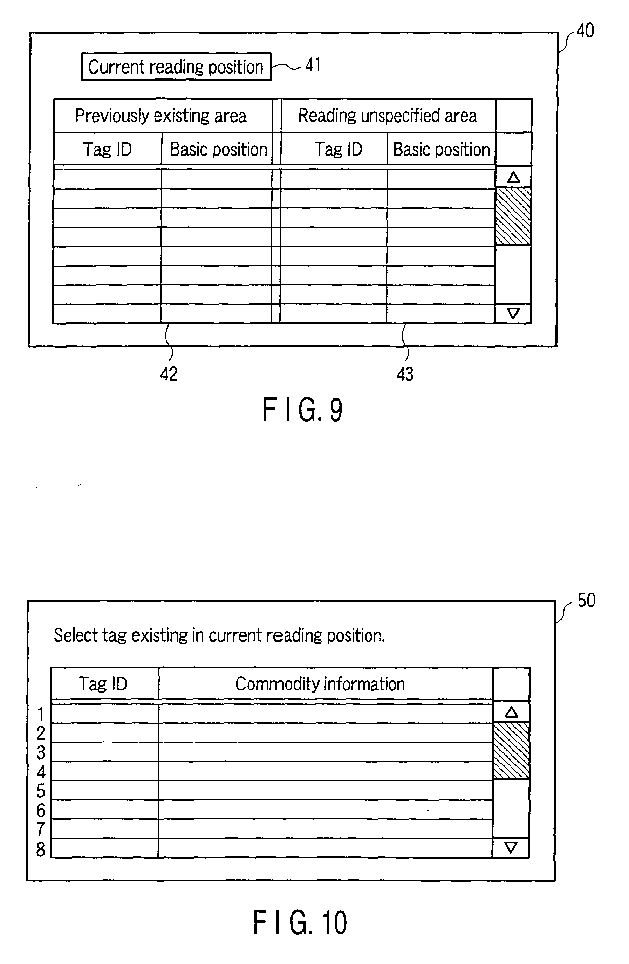

Next, the control section 16 displays an inventory screen 40 on a display section 13 in step ST2. An example of the inventory screen 40 is shown in FIG. 9. As shown, a display area 41 of the current reading position information, a previously existing area 42, and a reading unspecified area 43 are formed on the inventory screen 40. In each of the previously existing area 42 and the reading unspecified area 43, basic position information columns are formed corresponding to a plurality of tag ID columns.

After displaying the inventory screen 40, in step ST3, the control section 16 waits until reading position information is input. When a position code Y of one of the shelf partitions is input via the input section 12 in this state (YES in step ST3), the control section 16 overwrites and stores the position code Y in the reading position buffer 33 in step ST4. The control section 16 displays the position code Y in the current reading position information area 41 on the inventory screen 40.

Next, in step ST5, to extract all the tag IDs whose basic position information is consistent with the position code Y, the control section 16 retrieves the position management table 32 by the position code Y in the reading position buffer 33. After retrieval, in step ST6, the control section 16 sequentially displays all the tag IDs extracted from the reading position buffer 33 in the tag ID columns of the previously existing area 42 on the inventory screen 40.

Then, in step ST7, the control section 16 outputs transmission data of a tag query command to the modulator 151 of the wireless circuit section 15. Thereby, carrier waves are modulated by transmission data of the tag query command, and modulated signals are amplified by the transmission amplifier 152, and then emitted from the antenna 20 as radio waves.

When a wireless tag exists within the area which radio waves reach at this time and the wireless tag responds to the radio waves; the radio wave modulated by the ID stored in the memory of the wireless tag is emitted from the antenna of the wireless tag. This radio wave is received by the antenna 20 of the wireless tag reader 1. The radio wave reception signal is amplified by the reception amplifier 153, and then demodulated to tag data by the demodulator 154. The tag data is given to the control section 16. When a plurality of wireless tags exist in the area which radio waves reach, and a plurality of tags respond to the radio waves, tag data of the wireless tags are sequentially given to the control section 16.

After transmitting the tag query command, the control section 16 waits until the ID peculiar to the tag is demodulated from the tag data in step ST8. Whenever receiving a tag ID from the demodulator 154 (YES in step ST8), the control section 16 executes a tag ID reading process in step ST9

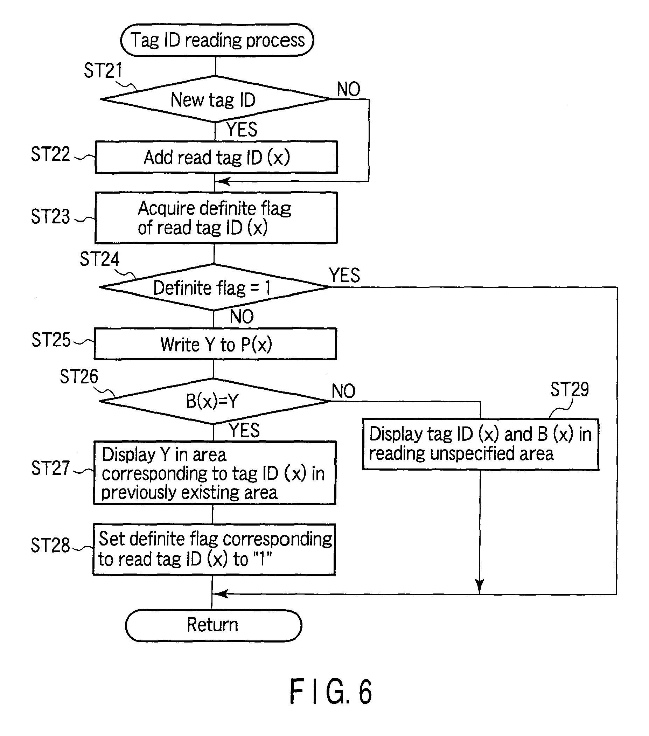

The tag ID reading process is illustrated by the flowchart of FIG. 6. That is, the control section 16 determines whether the ID of the tag data received from the demodulator 154 is a new ID which has not been stored in the position management table 32 in step ST21. When the ID is determined as a new ID, the control section 16 adds the tag ID to the tag ID area of the position management table 32 in step ST22. In the descriptions which follow, this tag ID will be expressed as tag ID (x) to be distinguished from other tag IDs.

After adding tag ID (x) to the position management table 32, or when determining that the tag ID (x) is not a new ID (NO in step ST21), the control section 16 proceeds to the next process.

That is, the control section 16 reads a record in which tag ID (x) is stored from the position management table 32 in step ST23. The record includes tag ID (x), basic position information, current position information, and a definite flag.

Next, the control section 16 checks the definite flag of the record in step ST24. When the definite flag has already been set to "1" (YES in step ST24), the present tag ID reading process ends. When the definite flag has been reset to "0" (NO in step ST24), in step ST25, the control section 16 writes the position code Y in the reading position buffer 33 to the current position information area P(x) of the record.

Next, the control section 16 determines whether the position code stored in the basic position information area B(x) of the record is consistent with the position code Y in the reading position buffer 33 in step ST26.

When the position code is consistent (YES in step ST26), in step ST27, the control section 16 displays the position code Y in the reading position buffer 33 in a basic position area corresponding to tag ID (x) of the previously existing area 42 on the inventory screen 40. The control section 16 sets the definite flag of the record to "1" in step ST28. Thereby, the current tag ID reading process ends.

When the position code is not consistent (NO in step ST26), the control section 16 stores the tag ID (x) and the position code of the basic position information area B (x) in the unspecified data buffer 34 in step ST29. Further, the control section 16 acquires article attribute information corresponding to the tag ID (x) from the tag management table 31, and stores the article attribute information in the unspecified data buffer 34. Then, the control section 16 displays the tag ID (x) stored in the unspecified data buffer 34 and the position code of the basic position information area B (x) in the reading unspecified area 43 on the inventory screen 40.

At this time, the tag ID (x) and the basic position information area B (x) are displayed by the color corresponding to color information of the article attribute information acquired from the tag management table 31. Only the tag ID (x) may be displayed by the corresponding color. Alternatively, attribute information other than color may be used for distinguishable display. Thereby, the present tag ID reading process ends.

After the tag ID reading process ends, the control section 16 determines whether reading of the wireless tag has ended in step ST10. When the time during which wireless tag data is not received continues for more than a predetermined time, for example, the reading is determined to have been ended. When the next wireless tag data is received within the predetermined time, on the other hand, the tag ID reading process is executed for the tag ID.

When determining that the reading of the wireless tag has been ended (YES in step ST10), the control section 16 determines whether the update instruction has been made in step ST11. The operator makes an update instruction by input of an update button provided in the input section. When the update instruction is made (YES in step ST11), the control section 16 executes the position information update process, which will be described below, in step ST12.

After executing the position information update process, or when the update instruction is not made (NO in step ST11), in step ST13 or step ST14, the control section 16 waits until an instruction for continue or end is made.

In order to continue the inventory process, the operator inputs a continue button provided in the input section. When continue is instructed by input of the continue button (YES in step ST13), the control section 16 determines whether change of the reading position has been instructed or re-reading has been instructed in step ST15.

In order to instruct re-reading of the wireless tag, the operator inputs a re-reading button provided in the input section. When re-reading is instructed by input of the re-reading button (NO in step ST15), the control section 16 proceeds to step ST7. That is, the control section 16 executes the transmission process of the tag query command again. At this time, the position code Y stored in the reading position buffer 33 is not changed. The control section 16 executes the above-described tag ID reading process whenever receiving the tag ID.

In order to change the reading position, the operator inputs a change button provided in the input section. When change of the reading position is instructed by the input of the change button (YES in step ST15), the control section 16 proceeds to step ST3. That is, the control section 16 waits until the position code Y of another shelf partition is input via the input section 12. When the position code Y is input, step ST4 and the steps thereafter will be executed again.

In order to end the inventory process, the operator inputs an end button provided in the input section. When end is instructed by the input of the end button (YES in step ST14), the control section 16 starts the position information definition process, which will be described below, in step ST16.

After the position information definition process ends, the control section 16 deletes the inventory screen 40 from the display section 13 in step ST17. Thereby, the present process ends. In accordance with the end of the process, data in the reading position buffer 33 and the unspecified data buffer 34 are cleared.

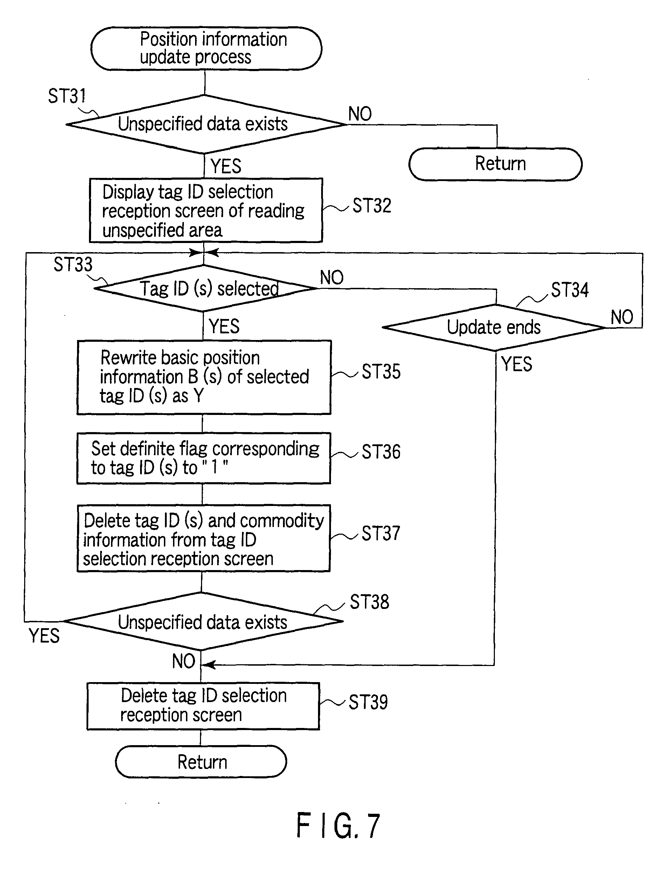

The procedure of the position information update process is concretely shown in the flowchart of FIG. 7. When the position information update process starts, the control section 16 determines whether data is stored in the unspecified data buffer 34 in step ST31. This data includes tag IDs, basic position information, and article attribute information. That is, when the current position information of any of the wireless tags whose tag IDs are read by the present reading cycle is different from the basic position information; data is stored in the unspecified data buffer 34.

When data is not stored in the unspecified data buffer 34, wireless tags whose current position information is different from the basic position information do not exist. In this case, the current position information update process ends.

When data is stored in the unspecified data buffer 34, a wireless tag having current position information different from the basic position information exists. In this case, the control section 16 displays a tag ID selection reception screen 50 on the display section 13 in step ST32. Then, the control section 16 receives selection of the wireless tag on the tag ID selection reception screen 50.

An example of the tag ID selection reception screen 50 is shown in FIG. 10. As shown, a tag ID area and an article information area, corresponding to consecutive line numbers beginning with 1, are formed on the tag ID selection reception screen 50. In the tag ID area, a list of tag IDs displayed in the reading unspecified area 43 is displayed. In the article information area, article attribute information stored in the unspecified data buffer 34 and corresponding to each tag ID is displayed. At this time, an article image stored in the tag management table 31 as corresponding to the tag ID may be displayed.

When the tag ID selection reception screen 50 is displayed, the control section 16 waits until one of the tag IDs is selected in step ST33.

The operator operates the input section 12 and inputs line number s corresponding to the tag ID to be selected. When line number s is input, the control section 16 regards the tag ID (s) corresponding to line number s as being selected.

When tag ID (s) is selected (YES in step ST33), the control section 16 rewrites basic position information B (s) stored in the position management table 32 as corresponding to the selected tag ID (s) as position code Y stored in the reading position buffer 33 in step ST35.

Further, the control section 16 sets the definite flag stored in the position management table 32 and corresponding to the selected tag ID (s) to "1" in step ST36. Then, the control section 16 clears the selected tag ID (s) and the basic position information and the article attribute information corresponding to the tag ID (s) from the unspecified data buffer 34 in step ST37. Further, the control section 16 deletes the selected tag ID (s) and the article attribute information corresponding to the tag ID (s) from the tag ID selection reception screen 50.

Next, the control section 16 determines whether other data is stored in the unspecified data buffer 34 in step ST38. When other data is stored (YES in step ST38), the control section 16 proceeds to step ST33, and waits until the next tag ID is selected. When the next tag ID is selected, the control section 16 executes steps ST35 to ST38 again.

When all the data in the unspecified data buffer 34 is thus cleared (YES in step ST38), the control section 16 deletes the tag ID selection reception screen 50 in step ST39. Thereby, the current position information update process ends.

In order to end the position information update process before all the data in the unspecified data buffer 34 is cleared, the operator inputs the end button provided in the input section 12. When end is instructed by the input of the end button (YES in ST34), the control section 16 deletes the tag ID selection reception screen 50 in step ST39. Thereby, the current position information update process ends.

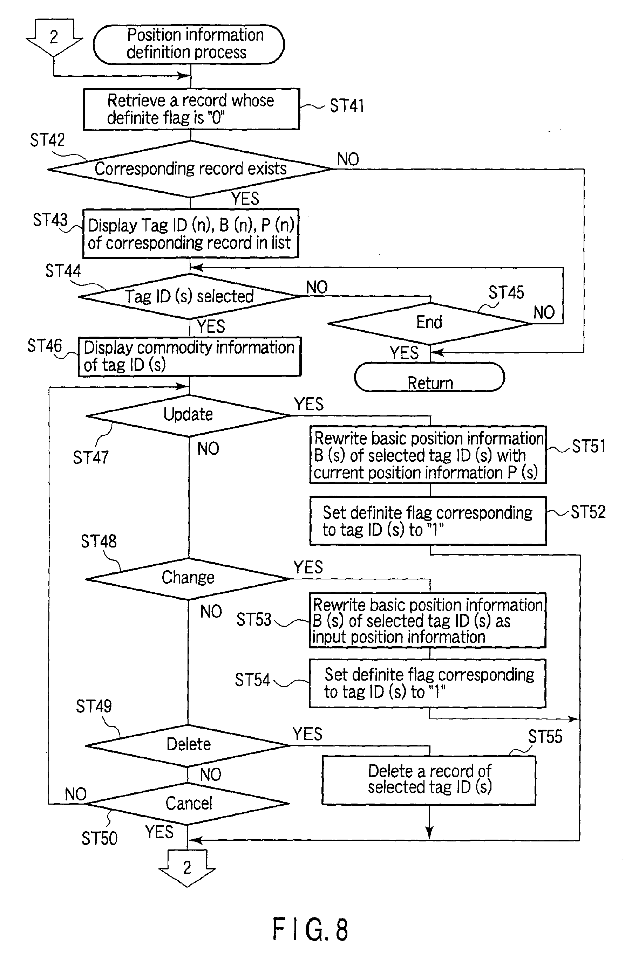

The procedure of the position information definition process is concretely shown by the flowchart shown in FIG. 8. When the position information definition process starts, the control section 16 retrieves the position management table 32 in order to detect a record in which the definite flag has not been set to "1" in step ST41. When such a record does not exist (NO in step ST42), the current position information definition process ends.

When a record in which the definite flag has not been set to "1" is detected (YES in step ST42), the control section 16 displays an indefinite tag notification screen 60 on the display section 13 in step ST43.

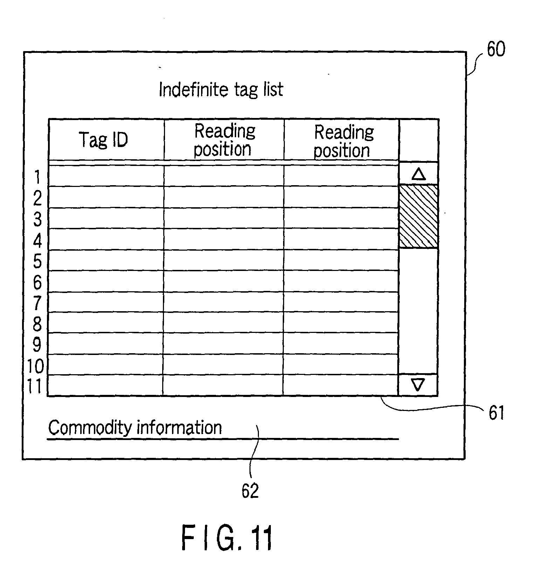

An example of the indefinite tag notification screen 60 is shown in FIG. 11. As shown, a list region 61 and an article information display region 62 are formed on the indefinite tag notification screen 60. On the list region 61, a tag ID area, a basic position area, and a reading position area are formed as corresponding to consecutive line numbers beginning with 1. Further, a tag ID (n), basic position information B (n), and current position information P (n) of a record in which a definite flag has not been set to "1" are sequentially displayed in the list region 61.

After displaying the indefinite tag notification screen 60, the control section 16 waits until any of the tag IDs is selected in step ST44.

The operator operates the input section 12 and inputs line number s corresponding to the selected tag ID. When line number s is input, the control section 16 regards tag ID (s) corresponding to line number s as being selected.

When tag ID (s) is selected (YES in step ST44), the control section 16 reads article attribute information stored in the tag management table 31 as corresponding to the selected tag ID (s) in step ST46. The read article attribute information is displayed in the article information display region 62 on the indefinite tag notification screen 60. At this time, the control section 16 acquires color information from the article attribute information. Then, the control section 16 fills the line in which the corresponding tag ID (s) of the list region 61 is displayed with the color corresponding to the acquired color information.

Next, the control section 16 waits until any of the instructions for update, change, deletion, or cancellation is made in steps ST47 to ST50.

In order to update the position information to the current position information, the operator inputs an update button provided in the input section 12. When update is instructed by input of the update button (YES in step ST47), the control section 16 rewrites the basic position information B(s) corresponding to the selected tag ID (s) of the position management table 32 as the current position information P (s) corresponding to the tag ID (s) in step ST51. Further, the control section 16 sets the definite flag corresponding to the corresponding tag ID (s) of the position management table 32 to "1" in step ST52. Then, the control section 16 returns to step ST41 and determines whether a record in which a definite flag has not yet been set to "1" exists.

In order to change the position information to input position information, the operator inputs a change button provided in the input section 12. When change is instructed by the input of the change button (YES in step ST48), the control section 16 rewrites the basic position information B (s) corresponding to the selected tag ID (s) of the position management table 32 as the position code input after the change button in step ST53. Further, the control section 16 sets the definite flag corresponding to the corresponding tag ID (s) of the position management table 32 to "1" in step ST54. Then, the control section 16 returns to step ST41 and determines whether a record in which a definite flag has not yet been set to "1" exists.

In order to delete the selected tag ID, the operator inputs a deletion button provided in the input section 12. When deletion is instructed by input of the deletion button (YES in step ST49), the control section 16 deletes the record of the tag ID (s) selected from the position management table 32 in step ST55. Then, the control section 16 returns to step ST41, and determines whether a record in which a definite flag has not yet been set to "1" exists.

In order to cancel selection of the tag ID, the operator inputs a cancel button provided in the input section 12. When cancellation is instructed by the input of the cancel button, the control section 16 returns to step ST41 and determines whether a record in which a definite flag has not yet been set to "1" exists.

At the point in time when the control section 16 returns to step ST41, article attribute information displayed in the article information display region 62 of the indefinite tag notification screen 60 is deleted. Further, the lines of the list region 61 filled with the color of the article attribute information are returned back to their original color.

Whenever line number s of the indefinite tag notification screen 60 is input (YES in step ST44), the control section 16 executes the processing of steps ST46 to ST55.

In order to end the position information definition process, the operator inputs the end button provided in the input section 12. When end is instructed by input of the end button (YES in step ST45), the control section 16 deletes the indefinite tag notification screen 60. Thus, the current position information definition process ends.

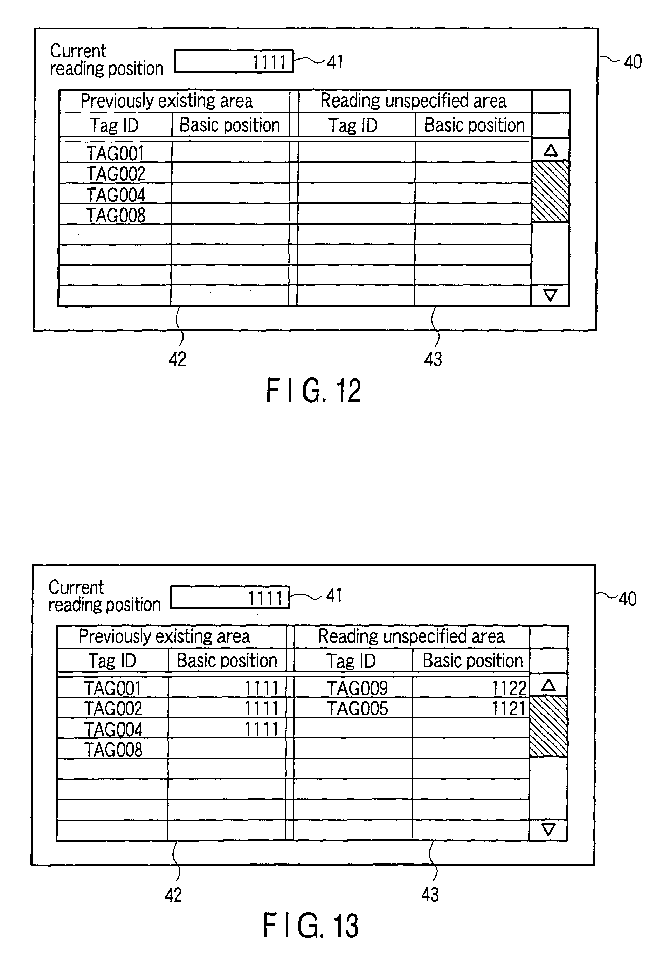

In order to execute an inventory process using a wireless tag reader 1 according to the embodiment with the above-described configuration, the operator switches the wireless tag reader 1 to an inventory mode. Thereby, the inventory screen 40 is displayed on the display section 13 of the wireless tag reader 1. Assume that the operator inputs the position code "1111", for example, of the shelf partition to which a first inventory is to be taken. Then, the position code "1111" is stored in the reading position buffer 33. Further, the position management table 32 is retrieved. Then, all the wireless tags whose basic position information is the position code "1111" are retrieved. The tag IDs of the retrieved wireless tags are displayed in the tag ID column in the previously existing area 42 on the inventory screen 40 (see FIG. 12).

The example of FIG. 12 shows a case where four wireless tags "TAG001", "TAG002", "TAG004", and "TAG008" exist as wireless tags whose basic position information is the position code "1111". That is, the example means that four items to which the wireless tags with the tag IDs "TAG001", "TAG002", "TAG004", and "TAG008" are attached are arranged in the shelf partition with the position code "1111".

Next, the operator brings the wireless tag reader 1 near the shelf partition with the position code "1111". Then, a radio wave of the tag query command is emitted from the antenna 20 of the wireless tag reader 1. Then, the tag ID of the wireless tag which responds to the radio wave is read by the wireless tag reader 1.

Whenever the tag ID of the wireless tag is read, it is determined whether the read tag ID is a new ID which has not been stored in the position management table 32. When the read tag ID is determined as a new ID, the tag ID is added to the tag ID area of the position management table 32.

When the read tag ID is not determined as a new ID, the position management table 32 is retrieved, and a definite flag stored therein as corresponding to the tag ID is checked. When the definite flag has already been set to "1", no process is executed for the tag ID.

When the definite flag has been reset to "0", the position code "1111" in the reading position buffer 33 is written in the current position information area corresponding to the tag ID of the position management table 32. Further, it is determined whether information in the basic position information area corresponding to the tag ID is the position code "1111". When the information is determined as being the position code "1111", the position code "1111" is displayed in the basic position information column corresponding to the tag ID of the previously existing area 42 on the inventory screen 40 (see FIG. 13). Further, the definite flag corresponding to the tag ID of the position management table 32 is set to "1".

Therefore, until the present inventory mode is canceled, the process for the tag ID will not be executed even when the tag ID is read again by the wireless tag reader 1. That is, both of the information of the basic position information area and the current position information area corresponding to the tag ID will be fixed to the position code "1111".

When information in the basic position information area corresponding to the tag ID is different from the position code "11111", on the other hand, the tag ID and the information in the basic position information area are displayed in the reading unspecified area 43 on the inventory screen 40 (see FIG. 13). At this time, the definite flag corresponding to the tag ID of the position management table 32 remains to be reset to "0".

The example of FIG. 13 shows a case where three tag IDs "TAG0001", "TAG002" and "TAG004" included in the four wireless tags whose basic position information is the position code "1111" are read, and "TAG008" is not read. Further, the example shows a case where the tag ID "TAG009" of the wireless tag whose basic position information is the position code "1122" and the tag ID "TAG005" of the wireless tag whose basic position information is the position code "1121" are read.

Based on the inventory screen 40 shown in FIG. 13, the operator knows that the article to which the wireless tag with the tag ID "TAG008" is attached is lost from the shelf partition with the shelf code "0001". Further, the operator can determine that the article to which the wireless tag with the tag ID "TAG009" is attached and the article to which the wireless tag with the tag ID "TAG005" is attached did not exist in the shelf partition at the time of the previous inventory, but may exist in the present inventory.

At this time, the tag ID "TAG009" on the inventory screen 40 is displayed by the color ("blue" according to data shown in FIG. 2) of the article attribute information stored in the tag management table 31 as corresponding to the tag ID "TAG009". Similarly, the tag ID "TAG005" on the inventory screen 40 is displayed by the color ("blue" according to the data shown in FIG. 2) of the article attribute information stored in the tag management table 31 as corresponding to the tag ID "TAG005".

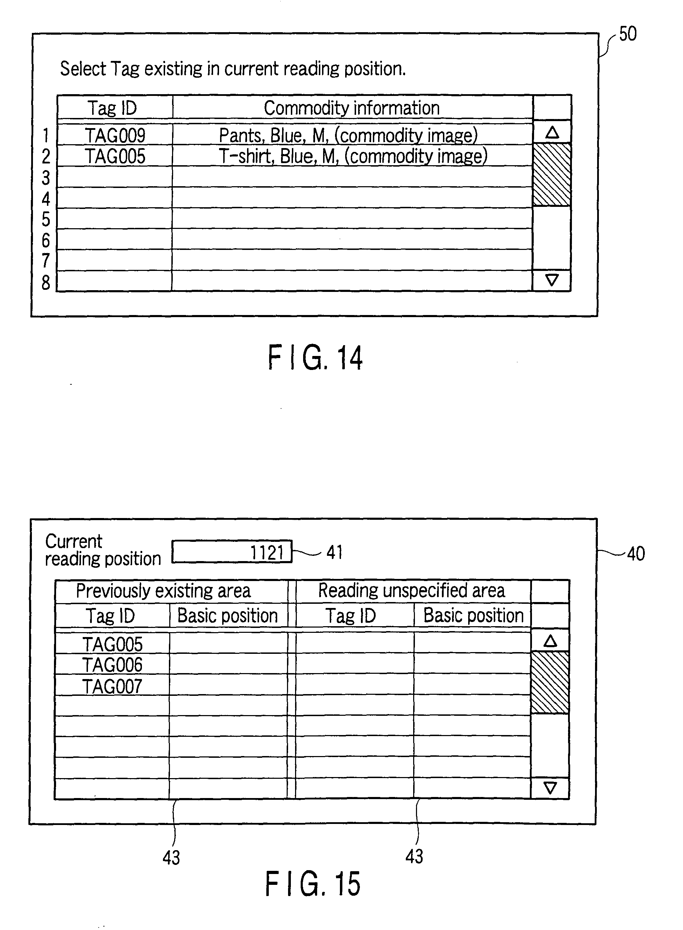

The operator therefore inputs the update button of the input section 12 to execute a position information update process. Then, the tag ID selection reception screen 50, as shown in FIG. 14, is displayed on the display section 13, and the operator checks the displayed shelf partition. When an article to which the wireless tag with the tag ID "TAG009" is attached actually exists, for example, in order to set this shelf partition as the basic position of the article, the operator inputs the line number "1" in which the tag ID "TAG009" is displayed. Then, the basic position information corresponding to the tag ID "TAG009" of the position management table 32 is updated to the current position code "1111". Thereby, an article to which the wireless tag with the tag ID "TAG009" is attached will be managed as being arranged in the shelf partition with the position code "1111" in the next inventory.

When an article to which the wireless tag with the tag ID "TAG005" is attached does not exist in the shelf partition, it is determined that the wireless tag of an article arranged in another shelf partition has been read. In this case, the operator does not need to perform a special process. Further, even when an article to which the wireless tag with the tag ID "TAG008" is attached cannot be find, the operator does not need to perform a special process.

As described above, the tag IDs "TAG009" and "TAG005" on the inventory screen 40 are displayed by the color of the article attribute information stored in the tag management table 31 as corresponding to each tag ID. Therefore, when it is clear that articles of that color do not exist in the shelf partition, the position information update process does not need to be executed.

Then, the operator inputs a continue button. Next, the operator inputs a change button. Then, the operator inputs the position code "1121", for example, of the shelf partition to which a second inventory is to be taken. Then, the position code "1121" is stored in the reading position buffer 33. Further, the position management table 32 is retrieved, and all the wireless tags in which the basic position information is the position code "1121" are retrieved, and the tag ID of the corresponding wireless tag is displayed in the tag ID column in the previously existing area 42 on the inventory screen 40 (see FIG. 15).

As shown in FIG. 15, in the wireless tag whose tag ID "TAG005" has been read at the time of inventory of the shelf partition in which the position code "1111" is set, the basic position information remains "1121" and is not updated. Therefore, in the present inventory, the tag ID "TAG005" is displayed in the tag ID column in the previously existing area 42.

Next, the operator brings the wireless tag reader 1 near the shelf partition with the position code "1121". Then, a radio wave of a tag query command is emitted from the antenna 20 of the wireless tag reader 1. Then, the tag ID of the wireless tag which responds to the radio wave is read by the wireless tag reader 1 without contact.

Assume that the tag ID "TAG005" has been read at this time. Then, the position code "1121" in the reading position buffer 33 is written in the current position information area corresponding to the tag ID "TAG005" of the position management table 32. Further, information of the basic position information area corresponding to the tag ID is the position code "1121", which is consistent with the position code of the current position information area. In this case, the position code "1121" is displayed in the basic position information column corresponding to the tag ID of the previously existing area 42. Further, a definite flag corresponding to the tag ID "1121" of the position management table 32 is set to "1". Thereby, an article to which the wireless tag with the tag ID "TAG005" is attached is managed as being arranged in the shelf partition with the position code "1121".

After performing a similar process for all the shelf partitions to which an inventory is to be taken, the operator inputs an end button. Then, a list of tag IDs, basic position information, and current position information of records whose definite flags are not set to "1" are displayed on a display section 13 as an unspecified tag notification screen 60.

Data of articles whose arrangement position has not been made definite is displayed on the indefinite tag notification screen 60. That is, articles arranged in a position different from that in the previous inventory (articles to which tag IDs whose current position information is different from the basic position information are attached) and lost articles (articles to which tag IDs in which only the basic position information is stored and the current position information is not stored are attached) are displayed. At this time, each line of the list is filled with the color of the article attribute information stored in the tag management table 31 as corresponding to the tag ID displayed in the line.

Then, the operator searches for articles which are arranged in a position different from that in the previous inventory or articles considered to have been lost according to the information on the list. When a corresponding article is found, the operator corrects the basic position information. That is, in order to update the basic position information to the current position information, the operator selects the tag ID and then inputs the update button. Further, in order to set the basic position information in a position different from the current position information, the operator inputs the change button after selecting the tag ID, and then manually inputs the corresponding position code. When an article is not found by searching, the operator inputs the delete button after selecting the tag ID.

Thereby, the position management table 32 stores the position code which specifies the location of each article whose wireless tag is identified by the present inventory activity as basic position information.

According to the above-described embodiment, even when a wireless tag of an article which should be arranged in a partition other than the shelf partition to which an inventory is to be taken is read, the tag ID of the wireless tag is displayed as unspecified data, which is distinguished from the wireless tag of the article which should be arranged in that shelf partition. Therefore, there is no possibility that the unspecified commodity is automatically managed as being arranged in a shelf partition to which an inventory is to be taken. As a result, the location of each commodity can be accurately managed by using the wireless tag.

In the above-described embodiment, when an update instruction is made in step ST11 in FIG. 5, the position information update process in step ST12 is executed. However, the position information does not need to be updated at this point in time, and can be updated in the position information definition process in step ST16. Therefore, the processing of the steps ST11 and ST12 may be omitted. In this case, the operator takes an inventory of all the shelf partitions first, and then search for articles to which the wireless tags listed as unspecified data are attached.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An article management device (1) **characterized by** comprising:
a tag reading section (16, 15, 20) configured to read identification information specific to a wireless tag attached to each article from the wireless tag;
a position information input section (12) configured to input position information which specifies each of a plurality of regions in which each article is arranged;
a position information storage section (33) configured to overwrite and store position information whenever the position information is input from the position information input section;
a tag basic position storage section (32) configured to store identification information specific to the wireless tag in association with the position information of each region in which each article to which the wireless tag is attached is arranged;
a position determination section (ST26) configured to determine whether the position information stored in the tag basic position information section in association with the identification information read from the wireless tag by the tag reading section is consistent with position information stored in the position information storage section; and
a notification section (ST27) configured to notify a determination result of each wireless tag by the position determination section, the identification information of said each wireless tag being read by the tag reading section.

2. The article management device according to claim 1, **characterized by** further comprising:
a basic position update section (ST35) configured to rewrite the position information stored in the tag basic position storage section in association with the identification information of the wireless tag which is determined as being inconsistent by the position determination section as position information stored in the position information storage section.

3. The article management device according to claim 2, **characterized by** further comprising:
a selection section (ST33) configured to select whether to rewrite position information stored in the tag basic position storage section with respect to the wireless tag determined as being inconsistent by the position determination section as position information stored in the position information storage section,
the basic position update section rewriting position information stored in the tag basic position storage section in association with the identification information as position information stored in the position information storage section with respect to only wireless tags for which rewrite selection is made by the selection section.

4. An article management device **characterized by** comprising:
a tag reading section (1) configured to read identification information specific to a wireless tag attached to each article from the wireless tag;
a position information input section (12) configured to input position information which specifies each of a plurality of regions in which each article is arranged;
a position information storage section (33) configured to overwrite and store position information whenever the position information is input from the position information input section;
a tag basic position storage section (32) configured to store identification information specific to the wireless tag in association with the position information of each region in which each article to which the wireless is attached is arranged;
a tag current position storage section (32) configured to store identification information of the wireless tag read by the tag reading section in association with position information stored in the position information storage section when the identification information is read; and
a basic position update section (ST35) configured to rewrite the position information stored in the tag basic position storage section in association with the identification information as the position information stored in the tag current position storage section in association with same identification information.

5. The article management device according to claim 4, **characterized by** further comprising:
a transfer tag detection section (ST31) configured to detect a wireless tag the position information of which stored in the tag basic position storage section in association with the identification information is different from the position information stored in the tag current position storage section in association with the same identification information; and
a display section (13) configured to selectably display identification information of the wireless tag detected by the transfer tag detection section,
the basic position update section rewriting the position information of identification information selected from identification information displayed on the display section.

6. The article management device according to claim 5, **characterized by** further comprising:
an article attribute storage section (31) configured to store attribute information such as color and shape of an article to which the wireless tag is attached in association with identification information of the wireless tag,
the display section displaying identification information of the wireless tag such that the identification information can be distinguished from attribute information stored in the article attribute information storage section in association with the identification information.

7. The article management device according to claim 4, **characterized by** further comprising:
a definition determination section (ST24) configured to determine whether position information stored in the tag current position storage section in association with identification information read by the tag reading section is consistent with the position information stored in the tag basic position storage section in association with the identification information, whenever the identification information is read,
a storage operation in the tag current position storage section being skipped when the definition determination section determines that the position information is consistent.

8. An article management device (1) **characterized by** comprising:
a reading means (16, 15, 20) for reading identification information specific to a wireless tag attached to each article from the wireless tag;
an input means (12) for inputting position information which specifies each of a plurality of regions in which each article is arranged;
a first storage means (33) for overwriting and storing position information whenever the position information is input from the input means;
a second storage means (32) for storing identification information specific to the wireless tag in association with position information of each region in which each article to which the wireless tag is attached is arranged;
a determination means (ST26) for determining whether the position information stored in the second storage means in association with the identification information read from the wireless tag by the reading means is consistent with the position information stored in the first storage means; and
a notification means (ST27) which notifies a determination result of each wireless tag by the determination means, the identification information of said each wireless tag being read by the tag reading means.

9. The article management device according to claim 8, **characterized by** further comprising:
a rewrite means (ST35) for rewriting position information stored in the second storage means in association with the identification information of the wireless tag which is determined as being inconsistent by the determination means as position information stored in the first storage means.

10. The article management device according to claim 9, **characterized by** further comprising:
a selection means (ST33) for enabling selection of whether to rewrite the position information stored in the second storage means with respect to each wireless tag determined as being inconsistent by the determination means as the position information stored in the first storage means;
the rewrite means rewriting position information stored in the second storage means in association with identification information of only a wireless tag for which rewrite selection is made by the selection means as position information stored in the first storage means.
